# EUROPÄISCHE PATENTSCHRIFT

(11) **EP 1 435 129 B1**
(45) Veröffentlichungstag und Bekanntmachung des Hinweises auf die Patenterteilung: **09.03.2011**
(21) Anmeldenummer: 02782879.7
(22) Anmeldetag: 10.10.2002
(51) Int. Cl.: H02N 2/00

(54) **HOCHSPANNUNGS-GENERATOR, INSBESONDERE ZUM EINSATZ ALS STÖRFREQUENZ-GENERATOR**
HIGH VOLTAGE GENERATOR, ESPECIALLY FOR USING AS A NOISE FREQUENCY GENERATOR
GENERATEUR HAUTE TENSION, EN PARTICULIER A UTILISER EN TANT QUE GENERATEUR DE FREQUENCE PERTURBATRICE

(30) Priorität: 12.10.2001 DE 10150636
(43) Veröffentlichungstag der Anmeldung: 07.07.2004
(73) Patentinhaber: Diehl BGT Defence GmbH & Co.KG, 88662 Überlingen (DE)
(72) Erfinder: STAINES, Geoffrey, 90552 Röthenbach (DE); DOMMER, Josef, 90451 Nürnberg (DE); SONNEMANN, Frank, 90403 Nürnberg (DE); BOHL, Jürgen, 90542 Eckenhaid (DE); EHLEN, Tilo, Dr., 45721 Haltern am See (DE)
(86) Internationale Anmeldenummer: PCT/EP2002/011359
(87) Internationale Veröffentlichungsnummer: WO 2003/034579

(56) Entgegenhaltungen:
- WO-A-98/36395
- DE-A- 3 522 994
- DE-A- 19 959 358
- US-A- 3 912 953
- US-A- 4 315 180
- PATENT ABSTRACTS OF JAPAN vol. 018, no. 016 (M-1540), 12. Januar 1994 (1994-01-12) & JP 05 256241 A (AISIN SEIKI CO LTD), 5. Oktober 1993 (1993-10-05) in der Anmeldung erwähnt

## Beschreibung

Die Erfindung betrifft einen Generator gemäß dem Oberbegriff des Anspruches 1.

Ein derartiger Hochspannungs-Generator ist insbesondere als die sogenannte Marx'sche Stoßspannungsschaltung bekannt, bei der zunächst eine Anzahl parallelgeschalteter Kapazitäten aufgeladen und dann über Funkenstrecken in Serie geschaltet wird, um dadurch eine entsprechend vervielfachte Spannung an eine Teststrecke zu legen, über die gegebenenfalls ein Überschlag erfolgt. Der mit einem Spannungsüberschlag verbundene große Entladestromfluß aus der Kondensatorbatterie führt zu hochfrequenten Abstrahlungen, die ihrerseits bekanntlich in ihrer Umgebung Funkverkehr zumindest beeinträchtigen und elektronische Schaltungen insbesondere eingangsseitig stören oder sogar zerstören können.

Dieser Effekt einer kräftigen Funkenentladung wird als nichtletale Waffe propagiert, nämlich als System zum nachhaltigen Stören oder gar Zerstören gegnerischer Kommunikationsmöglichkeiten (vgl. DER SPIEGEL, Heft 7/1997, Seiten 53 ff, Ende des 3. Absatzes der linken Spalte von Seite 54).

Ein gattungsgemäßer Hochspannungs-Störgenerator ist aus der DE 199 59 358 A1 als modular in Serienschaltung aufgebaute RF-Strahlungsquelle mit einem autonom arbeitenden Hochenergiegenerator bekannt, wobei Primärenergie über einen Spannungserhöhungsmodul und ein Entladungskabel ein Antennensystem diskontinuierlich speist, um eine hohe Pulsleistung in Frequenzbereichen oberhalb 100 MHz abzustrahlen. Für die Primärenergieversorgung kann ein von Sprengstoff beaufschlagter Piezogenerator vorgesehen und der ihm nachgeschaltete Spannungserhöhungsmodul als Marx'sche Stoßspannungsschaltung eingangs erläuterter Funktion realisiert sein. Zur Pulserzeugung wird ein Kabelpulser nach Vedenski angegeben, der je nach Beschaltung monopolare oder bipolare Rechteckspannungspulse erzeugt, deren Pulslänge über die Länge des Hochspannungskabels auf dem Weg zur abstrahlenden Breitbandantenne einstellbar ist. Die Impulsform ist allerdings systembedingt nicht sehr steilflankig und deshalb nicht optimal in Hinblick auf eine anzustrebende breitbandige Wirkung. Hinzu kommt, dass eine solche Modul-Kettenschaltung sehr raumaufwendig und daher kaum handhabbar, allenfalls für stationären Betrieb geeignet ist.

Nicht um eine solche nichtletale Waffenwirkung handelt es sich, wenn kodierte Hochfrequenzsignale zur Objektidentifikation an einem Ort erzeugt werden sollen, an dem keine elektrische Energie für die Generatorschaltung zur Verfügung steht und deshalb gemäß WO 98/36395 ein Primärenergie-Wandler unter Einsatz beispielsweise des piezoelektrischen Effektes eingesetzt wird. Die elektrische Energie beaufschlagt eine Funkenstrecke oder dergleichen nichtlineares Element zum Gewinnen eines schmalbandigen Hochfrequenzsignales, das z.B. mittels des Reflexmusters eines Oberflächenwellenfilters kodiert und dann als Identinformation ausgesendet werden kann. Würde die Energieerzeugung erhebliche Störstrahlung hervorrufen, dann wäre allerdings die aus dem piezoelektrischen System zu speisende Kodierschaltung in ihrer Funktion gestört oder sogar blockiert.

Auch die Erzeugung einer Zündflamme bei einem Piezo-Feuerzeug nach GB 1 554 332 A mit seinen beiden mechanisch gegensinnig in Serie angeordneten, aber elektrisch parallelgeschalten Piezosäulen, die von einem federelastisch vorgespannten Hammer mit einem mechanischen Impuls beaufschlagt werden, um über eine Drossel eine extern gelegene Funkenstrecke als Gasanzünder zu speisen, haben nichts mit der Problematik eines kompakt aufgebauten Hochenergie-Störimpulsgenerators zu tun. Das gilt sinngemäß für die nach gleichem Prinzip arbeitenden Anlaß-Zündkerze für eine Verbrennungskraftmaschine, mit mechanisch gegensinnig in Serie liegenden aber elektrisch parallel geschalteten zylindrischen Piezoelementen nach JP 05256241 A (Abstract) zum Speisen einer Funkenstrecke vor einem Stirnende dieser Anordnung, insoweit wie bei der herkömmlichen elektrischen Ottomotor-Zündkerze. Bei der von einer Nockenwelle gesteuerten Zündvorrichtung nach DE 24 12 300 C3 wird die durch den Piezoeffekt erzeugte Ladungsverschiebung an einem distanzhaltenden Koppelglied zwischen zwei axial hintereinander liegenden zylindrischen piezoelektrischen Elementen abgegriffen und über ein abgeschirmtes Kabel an den Ort der Zündung eines Treibstoffgemisches oder dergleichen geführt. Auch daraus ist ersichtlich nichts herleitbar für die Optimierung der Funktion einer nicht-letalen, auf breitbandiger und hochenergetischer, hochfrequenter Störabstrahlung basierenden Waffe.

Der Erfindung liegt die Aufgabe zugrunde, eine derartige Waffe anzugeben, die hinsichtlich ihrer Energieversorgung autark, ihrer Abmessungen universell einsetzbar sowie ihres Störstrahlungsspektrums und ihrer abgestrahlten Energie besonders wirksam ist.

Diese Aufgabe ist durch die im Hauptanspruch angegebenen wesentlichen Merkmale der Erfindung gelöst.

Danach sind zwei längspolarisierte Piezogenerator-Säulen miteinander fluchtend linear, aber elektrisch gegensinnig in Serie geschaltet, in ein rohrförmiges Gehäuse unter radialem Abstand zu dessen Innenmantelfläche eingespannt. Innerhalb des Gehäuses können diese Säulen von wenigstens einem an das Gehäuse stirnseitig angeflanschten Schockgenerator axial beaufschlagt werden. Das führt in jeder Piezo-Säule zu einer axialen Ladungsverschiebung, also zum Aufbau einer Spannung über deren beiden Enden. Weil aber infolge der Antiserienschaltung an den voneinander abgewandten Enden der Säulen und somit an beiden Stirnenden des Gehäuses stets weitgehend gleiches elektrisches Potential herrscht, besteht praktisch keine Gefahr eines Spannungsüberschlages zwischen den Stirnenden über die Länge des Gehäuses, so daß die Isolationseigenschaften des Gehäuses unkritisch sind.

Im Inneren des Gehäuses erstrecken sich radial distanziert gegenüber den Piezo-Säulen vorzugsweise hohlzylindrische Elektroden vom jeweiligen Gehäuse-Stimende, wo sie elektrisch leitend an das dortige Säulen-Ende angeschlossen sind, bis in den Bereich, in dem die beiden Säulen über ein elektrisch leitendes Koppelstück axial gegeneinander abgestützt sind. Jede infolge der Längsdruckbeaufschlagung aufgeladene Piezo-Säule entlädt sich über ihre Elektrode und eine radiale Funkenstrecke zum gemeinsamen Koppelstück am gegenüberliegenden Säulen-Ende hin. Weil diese Entladungen allerdings umgebungsbedingt nicht exakt zeitgleich einsetzen und die Umgebung der axial aufeinander zu weisenden Stirnränder der Elektroden schon von der ersten in radialer Richtung einsetzenden Entladung ionisiert wird, kommt es außerdem parallel zum Koppelstück zu Überschlägen in axial orientierten Funkenstrecken zwischen den Elektroden-Stirnrändern, also parallel zur Mittellängsachse des Gehäuses. Solche im Zentrum des Gehäuses räumlich und zeitlich einander überlappend stattfindenden Funkenüberschläge bedingen entsprechend steilflankig einsetzende Stromflüsse durch die Elektroden und haben deshalb ein wünschenswertes da sehr leistungsstarkes und extrem breitbandiges Mikrowellen-Störspektrum zur Folge. Das wird noch oberwellenreicher, wenn auf eine stationäre Isolierfluid-Füllung des Gehäuses verzichtet und statt dessen die Entladung schon nach kurzer Zeit etwa durch Einblasen von Druckluft in den Überschlagsraum abrupt wieder unterbrochen wird.

Als Schockgenerator für die Längsdruckbeaufschlagung der aufeinanderstehenden Piezosäulen dient vorzugsweise ein pyrotechnischer Gasgenerator auf Basis der in der Technik der Rohrmunition oder der Airbag-Treibsätze leicht verfügbaren, ihrerseits pyrotechnisch oder elektrisch initiierbaren Treibpulver. Im Vergleich zu einem, im Rahmen vorliegender Erfindung grundsätzlich ebenfalls anwendbaren, explosivstoffgetriebenen Schockgenerator weist der Gasgenerator insbesondere die Vorteile auf, über die Körnung und Mischung des Treibpulvers die Druckanstiegsflanke leicht und reproduzierbar beeinflussen zu können. Außerdem ist ein pyrotechnischer Gasgenerator mit seinem Treibpulver in der Serienfertigung viel unproblematischer handhabbar, als ein explosionsstoffgetriebener Schockgenerator.

Dieses erfindungsgemäß erstellte, leistungsstarke System der Integration von Schock-, Hochspannungs- und Mikrowellen-Generator ist aufgrund der vernachlässigbar geringen äußeren Überschlagsgefahr so kleinbauend realisierbar, daß es mittels Trägermunition verbringbar ist und sogar in einem Aktenkoffer untergebracht, also unauffällig positioniert werden kann, um z.B. gegnerische - etwa konspirative oder terroristische - drahtlose und drahtgebundene Kommunikation unmittelbar vor dem Einschreiten eigener Sicherheitskräfte breitbandig lahmzulegen. Dabei ist von besonderem praktischem Interesse, daß aufgrund von abmessungsbedingten Resonanzerscheinungen im breitbandigen Störspektrum schmalbandige Wirklücken auftreten, also begrenzte Frequenzbereiche, die deutlich weniger gestört sind. In diesen schmalen Bändern kann deshalb die Funkkommunikation der eigenen Kräfte aufrechterhalten bleiben, während im übrigen eine breitbandige Störung wirksam wird.

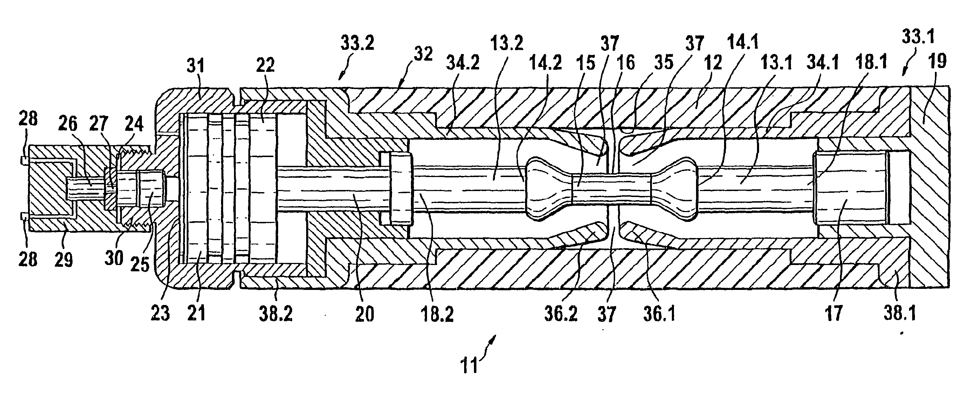

Zur näheren Erläuterung der Erfindung und der durch sie eröffneten Möglichkeiten sowie hinsichtlich weiterer Vorteile und Abwandlungen der beschriebenen Lösung wird auf die weiteren Ansprüche verwiesen, sowie auf nachstehende Beschreibung eines in der Zeichnung im Axial-Längsschnitt unter Beschränkung auf das Wesentliche stark abstrahiert aber angenähert maßstabsgerecht skizzierten bevorzugten Ausführungsbeispiels zur Erfindung.

Der in der einzigen Figur der Zeichnung dargestellte Generator 11 dient der schockinduzierten Erzeugung von Hochspannung, die sich unter sehr breitbandiger Störfrequenzabstrahlung entlädt. Der Generator 11 enthält koaxial und radial distanziert in einem hohlzylindrischen, rohrförmig gestreckten Gehäuse 12 zwei in als solcher bekannter Weise jeweils aus axial polarisierten Piezo-Scheiben gestapelte Hochspannungs-Säulen 13 (13.1 und 13.2). Diese sind mit ihren Kopfenden 14 gegeneinander abgestützt, unter Zwischenlage eines inerten (also nicht piezosensitiven), elektrisch leitenden Koppelstückes 15. Das weist im Längsverlauf eine zentrale Einschnürung 16 seines Querschnitts auf, etwa wie dargestellt nach Art zweier mit ihren kleineren Grundflächen aufeinander zu weisender aber voneinander axial distanzierter Kegelstümpfe. Gegenüberliegend ist die eine Piezo-Säule 13.1 mit ihrem Fußende 18.1 gegen eine Trägheitsmasse 17 vor einem deckelförmigen Boden 19 abgestützt. Axial gegenüber liegt gegen das Fußende 18.2 der anderen Piezo-Säule 13.2 ein Druckübertragungs-Stempel 20 an, der von einem koaxial dahintergelegenen Kolben 21 wesentlich größeren Durchmessers in Längsrichtung druckbeaufschlagbar ist. Der Kolben 21 ist mit Dichtringen 22 in einem Zylinder 23 geführt, in den jenseits des Stempels 20 ein Aufnahmeraum 24 für einen kleinen dosenförmigen Gasgenerator 25 mit relativ zum Kolben 21 sehr kleinem Durchmesser mündet. Axial gegenüberliegend mündet in den Aufnahmeraum 24 ein von einem pyrotechnischen Zündelement 26 ausgehender Anzündkanal 27.

Das z.B. über mechanischen Anstich oder wie angedeutet elektrisch über Anschlüsse 28 initiierbare Zündelement 26 mit seinem Anzündkanal 27 ist in einem Verschluß 29 gelegen, der austauschbar am Aufnahmeraum 24 für den Gasgenerator 25 befestigbar, etwa wie skizziert koaxial auf die Wandung des Aufnahmeraumes 24 aufschraubbar ist. Dieser Aufnahmeraum 24 wiederum liegt in einem zentralen Stutzen 30 vor einer Haube 31, die den Zylinder 23 beinhaltet und die, wie der gegenüberliegende Boden 19, mit der hohlzylindrischen Wandung 32 axial belastbar verbunden, beispielsweise unmittelbar oder mittels achsparalleler Spannschäfte verschraubt ist.

Um parasitäre Überschläge an feldverdichtenden Konstruktionskanten zu vermeiden, sind die Piezo-Säulen 13 an ihren Kopf- und Fußenden 14, 18 von kleinerem Durchmesser als die hier bündig stumpf anliegenden Flächen der Trägheitsmasse 17, des Koppelstückes 15 und des Stempels 20, deren radialen Überstände wie in der Zeichnung berücksichtigt mit möglichst großen Radien dem elektrischen Feldverlauf angepaßt abgerundet sind.

In die beiden Gehäuse-Stimenden 33, also in das mit der Trägheitsmasse 17 ausgestattete Stirnende 33.1 und in das gegenüberliegend mit dem Stempel 20 ausgestattete Stirnende 33.2, ist koaxial jeweils eine Elektrode 34 unter radialer Distanz zu den Säulen 13.1, 13.2 in das hohlzylindrische Gehäuse 12 elektrisch isoliert eingesetzt. Vorzugsweise besteht das Gehäuse 12 ganz aus elektrisch isolierendem Material wie faserverstärktem Kunststoff, so daß es wie skizziert keiner zusätzlichen Isolierung der Elektroden 34 bedarf. Jede der beiden Elektroden 34 schmiegt sich über den größten Teil ihrer axialen Länge an die Gehäuse-Innenwand 35 an. Die Umgebung des jeweiligen Elektroden-Stirnrandes im Zentralbereich des Koppelstückes 15 hebt dann aber von jener Innenwand 35 ab, um sich dem Koppelstück 15 radial zuzuneigen. Dieser frei vorkragende Stirnrand ist verdickt und dient als Funkenelektrode 36 für den radialen Überschlagsbereich als Funkenstrecke 37 zum Koppelstück 15 hin sowie für einen zusätzlichen axialen Überschlagsbereich (Funkenstrecke 37) zum axial gegenüberliegenden Elektroden-Stirnrand hin. Die jeweilige Elektrode 34 kann wie skizziert als dünnwandiger Hohlzylinder ausgebildet sein, dessen Durchmesser sich zum Stirnrand hin nach Art eines Hohlkegelstumpfes verjüngt. Anstelle einer geschlossenen Wandung kann die Elektrode 34 aber auch als leitendes Gitterwerk oder als Gruppe achsparalleler, auf den Stirnrand zu radial abknickend verlaufender Stäbe auf der Gehäuse-Innenwand 35 gehaltert sein.

Ein axial dem Stirnrand gegenüberliegendes, nach außen zu einem umlaufenden Kragen abgestuft aufgeweitetes jeweiliges Halterungsende 37.1 bzw. 37.2 der Elektroden 34.1, 34.2 liegt axial vor dem entsprechenden Stirnende 33.1, 33.2 des rohrförmigen Gehäuses 12. Hier sind die Elektroden 34.1, 34.2 einerseits über den Boden 19 und die Trägheitsmasse 17 sowie andererseits über die Haube 31, den Kolben 21 und den Stempel 20 elektrisch leitend an die Fußenden 18.1, 18.2 der zugeordneten der Piezo-Säulen 13.1, 13.2 angeschlossen. In jenen Anschlußbereichen sind die Elektroden 34 auch einer Adaption von zusätzlichen draht- oder hülsenförmigen Antennenelementen zugänglich, um den Stromfluß und damit die Mikrowellenabstrahlung beim Durchzünden der Funkenstrecken 37 noch zu intensivieren.

Zur Inbetriebnahme dieses Hochspannungs- und Störfrequenz-Generators 11 mit austauschbar angeflanschtem pyrotechnischem Impulsgenerator 25 wird das dosenförmige Gehäuse des Gasgenerators 25 dem Zylinder 23 gegenüber koaxial in den Aufnahmeraum 24 eingeführt und dann der Verschluß 29 mit dem Zündelement 26 mittels eines Schraub- oder Bajonettverschlusses aufgesetzt. Das Zündelement 26 reagiert z.B. auf elektrisches Initiieren und aktiviert dann seinerseits durch den Anzündkanal 27 hindurch die Pulverfüllung im Gasgenerator 25. Qualitativ wie etwa von der Airbag-Initiierung bekannt (vgl. PCT/EP93/02550) entsteht ein großes Volumen an Abbrand-Reaktionsgasen, die durch einen dünnen Kanal in den Zylinder 23 dagegen sehr großen Durchmessers austreten und den entsprechend großflächigen Kolben 21 schlagartig beschleunigen, der über den Stempel 22 die beiden koaxial voreinander gelegenen Piezo-Säulen 13.2-13.1 über ihr zentrales Koppelstück 15 der trägen Gegenmasse 17 gegenüber mit einem Längsdruckimpuls beaufschlagt.

Weil die beiden Piezo-Säulen 13.2-13.1 elektrisch gegensinnig in Serie liegen, so daß jeweils bei den Kopfenden 14.2 und 14.1 einerseits und andererseits bei den Fußenden 18.2 und 18.1 gleiche Polaritäten und praktisch gleiche Spannungen herrschen, kommt es weder zwischen den elektrisch leitenden Stirnenden des Gehäuses 12 noch auch nur zunächst zwischen den Funkenelektroden 36 zu Entladungserscheinungen. Die Potentialdifferenz der jeweiligen Piezosäulen-Spannung liegt vielmehr radial zwischen den Funkenstreckenelektroden 36.2/36.1 einerseits und andererseits dem Koppelstück 15, so daß es hier zum einleitenden Funkenüberschlag, also zum Entladen der Piezospannung über zunächst eine der zwei einander im Gehäuse 12 axial dicht benachbarten, radial orientierten Funkenstrecken 37 kommt, ehe gleich danach in dieser vorionisierten Umgebung auch die andere Funkenstrecke 37 zündet. Dieser entsprechend steil ansteigende aber zeitlich nicht synchronisierte Stromfluß durch die Elektroden 34.2, 34.1 und über die beiden einander benachbarten radial bezüglich der Systemlängsachse orientierten Funkenstrecken 37 führt zum Aufbau einander überlagerter stark oszillierender elektromagnetischer Felder und somit zu intensiver, aufgrund der kurzen Schaltvorgänge über die kurzen Funkenstrecken 37 sehr breitbandiger Mikrowellenabstrahlung. Deren Spektrum wird noch dadurch verbreitert, daß die beiden über die radialen Funkenstrecken 37 zufallsbedingt ungleich ablaufenden Entladevorgänge sofort zu einer Potentialdifferenz zwischen den beiden Funkenstreckenelektroden 36 und wegen der schon ionisierten Umgebung dann auch gleich noch zu überlagertem Funkenüberschlag längs axialer Funkenstrecken 37 direkt zwischen den freien Stirnrändern der beiden Elektroden 36 führen.

Eine wünschenswerte zeitliche Dehnung des Abstrahlintervalles ergibt sich daraus, daß der mechanische Druckaufbau in den Piezosäulen 13 aufgrund des Abbrandverhaltens im Gasgenerator 25 und der Umsetzung von anwachsendem Gasvolumen zu Druck im Zylinder 23 im Millisekundenbereich und damit extrem langsam im Vergleich zu den Funkenstrecken-Schaltvorgängen abläuft. Das hat zur Folge, daß es mit fortschreitendem Druckaufbau zu wiederholtem neuem Durchzünden über die Funkenstrecken 37 und deshalb zu zeitlich länger anstehender Mikrowellenabstrahlung kommt. Wie schon erwähnt wird der Funkenstrecken-Stromfluß und damit die hochfrequente Abstrahlung noch verstärkt, wenn bei den Stirnenden 33 des Gehäuses 12 elektrisch leitende Drähte oder Hülsen als zusätzliche Antennenelemente an die Elektroden 34 angeschlossen werden, die dafür nicht im Stromkreis über die jeweilige Piezo-Säule 13 liegen müssen.

Das Spektrum der Störabstrahlung läßt sich noch weiter verbreitern, wenn nach dem steilen Einsatz der Entladevorgänge über die Funkenstrecken 37 deren ebenso plötzliche Beendigung herbeigeführt wird. Das läßt sich dadurch relativ leicht bewerkstelligen, daß durch den Ringraum zwischen den Elektroden 34 und den Piezo-Säulen 13 in Inertgas oder einfach Druckluft hindurchgeblasen wird. Dafür können vor den Stirnenden 33 radiale Leitungsanschlüsse in das Gehäuse 12 eingeführt sein, die aber in der Zeichnung nicht berücksichtigt sind.

Um sogleich nach Beendigung der Entladung die beiden Piezo-Generatoren 13 erneut zu aktivieren, kann die Haube 31 mit dem Verschluß 29 nach Art eines Revolvers mit einer verschiebbaren oder rotierenden Anordnung mehrerer gegeneinander versetzter Gasgeneratoren 25 samt Zündelementen 26 ausgestattet sein, die einfach zum nächsten unverbrauchten Element weiterbewegt wird. Solch eine zusätzliche zeitliche Verlängerung der Mikrowellenabstrahlung erhöht in wünschenswerter Weise deren Störwirkung.

Kurz gesagt ergibt sich also ein sehr kleinbauender, leistungsstarker Störfrequenz-Generator 11 durch die Kombination eines mechanischen Impuls-Generators 25 mit zwei von ihm mechanisch beaufschlagbaren, elektrisch gegensinnig in Serie geschalteten, vorzugsweise axial hintereinander gelegenen Piezo-Säulen 13, die mit ihren dann voneinander abgewandten Enden 18 elektrisch leitend an Elektroden 34 angeschlossen sind, welche sich parallel zu den Piezo-Säulen 13 bis zu einem elektrisch leitenden Koppelstück 15 im Gehäusezentrum zwischen den Piezo-Säulen 13 erstrecken, wo sie zum Koppelstück 15 hin geneigt als Funkenstreckenelektroden 36 enden. Die zunächst mit nur der Spannung einer der beiden Piezosäulen 13 über eine radiale Funkenstrecke 37 einsetzende und sich gleich danach mit doppelter Spannung über eine axiale Funkenstrecke 37 zwischen den Elektroden 36.1 - 36.2 steigernde Entladung hat derart kräftige, stark oszillierende Ströme durch die Elektroden 34 zur Folge, daß - auch ohne externe Zusatzantennen an den Gehäuseenden - ein extrem breitbandiges Mikrowellenspektrum überaus leistungsstark abgestrahlt wird. Da somit die kompakte Elektrodenstruktur selbst als integrierte Antenne wirkt, stellt dieses kleinbauende da überschlagsresistente Gesamtsystem einen autark einsetzbaren Mikrowellenstrahler mit integriertem Hochspannungsgenerator dar, der unauffällig in einem Behältnis vom Format etwa einer Aktentasche untergebracht und betrieben werden kann.

## Patentansprüche

1. Hochspannungs-Generator (11), insbesondere zum Einsatz als Störfrequenz-Generator (11), mit Piezo-Säulen (13) zum Wandeln von mechanischem Druck in elektrische Spannung, die über Funkenstrecken (37) kurzschließbar ist,
**dadurch gekennzeichnet,**
**daß**, in Serie mit einem mechanischem Impuls-Generator (25), in einem hohlzylindrischen Gehäuse (12) über ein elektrisch leitendes Koppelstück (15) zwei Piezo-Säulen (13) elektrisch gegensinnig in Serie geschaltet sind, längs derer sich Elektroden (34) von den Stirnenden der Säulen (13) in den Bereich des Koppelstückes (15) erstrecken und hier als Funkenelektroden (36) für Funkenstrecken (37) zum Koppelstück (15) hin und zwischeneinander enden.

2. Generator nach Anspruch 1,
**dadurch gekennzeichnet,**
**daß** als mechanischer Impuls-Generator ein Gas-Generator (25) vorgesehen ist, dessen Reaktionsgase über einen Kolben (21) auf die Piezo-Säulen (13.2 - 13.1) einwirkt.

3. Generator nach Anspruch 1 oder 2,
**dadurch gekennzeichnet,**
**daß** an einem Stirnende (33) des Gehäuses (12) zur axial verschiebbaren Aufnahme eines Kolbens (21) ein Zylinder (23) vorgesehen ist, in den ein Aufnahmeraum (24) für einen Gasgenerator als Impuls-Generator (25) mündet, der austauschbar mit einem ein pyrotechnisches Zündelement (26) enthaltenden Verschluß (29) bestückbar ist.

4. Generator nach einem der vorangehenden Ansprüche,
**dadurch gekennzeichnet,**
**daß** sein Impuls-Generator (25) an einem Gehäuse-Stimende (33.2) über Kolben (21) und Stempel (20) auf die Piezo-Säulen (13) einwirkt, die am axial gegenüberliegenden Gehäuse-Stirnende (33.1) über eine träge Gegenmasse (17) und einen Boden (19) dem rohrförmigen Gehäuse (12) gegenüber abgestützt sind.

5. Generator nach einem der vorangehenden Ansprüche,
**dadurch gekennzeichnet,**
**daß** ein mittig eingeschnürtes Koppelstück (15) als Funkenstreckenelektrode zwischen den linear fluchtend angeordneten, elektrisch in Antiserie geschalteten Piezo-Säulen (13.2 - 13.1) vorgesehen ist.

6. Generator nach einem der vorangehenden Ansprüche,
**dadurch gekennzeichnet,**
**daß** im Bereich jedes der Enden (18) zweier fluchtend angeordneter, elektrisch miteinander in Antiserie verschalteter Piezo-Säulen (13) eine längs der Gehäuse-Innenwand (35) geführte Elektrode (34) elektrisch angeschlossen ist, die beide im Bereich eines elektrisch leitenden Koppelstückes (15) zwischen den beiden Piezo-Säulen (13) aufeinander zu weisend als Funkenstreckenelektroden (36) enden.

7. Generator nach dem vorangehenden Anspruch,
**dadurch gekennzeichnet,**
**daß** jede Elektrode (34) als dünner Hohlzylinder ausgeführt ist, der sich einerseits, zu den Funkenstrecken-Elektroden (36) hin, hohlkegelstumpfförmig verjüngt und andererseits, axial gegenüberliegend, zu einem umlaufenden Kragen aufweitet, gegen welchen das Stirnende (33) des rohrförmigen Gehäuses (22) axial anliegt.

## Claims

1. High-voltage generator (11), in particular for use as a jamming frequency generator (11), having piezo columns (13) for conversion of mechanical pressure to electrical voltage, which can be short-circuited via spark gaps (37),
**characterized in that**
two piezo columns (13) are electrically connected in series in opposite senses, in series with a mechanical impulse generator (25), in a hollow-cylindrical housing (12) via an electrically conductive coupling piece (15), along which piezo columns (13) electrodes (34) extend from the ends of the columns (13) into the area of the coupling piece (15) and end here as spark electrodes (36) for spark gaps (37) from the contact piece (15) and between one another.

2. Generator according to Claim 1,
**characterized in that**
a gas generator (25) is provided as the mechanical impulse generator, and its reaction gases act on the piezo columns (13.2 - 13.1) via a piston (21).

3. Generator according to Claim 1 or 2,
**characterized in that**
a cylinder (23) is provided at one end (33) of the housing (12) in order to hold a piston (21) such that it can be moved axially, into which cylinder (23) an
accommodation area (24) for a gas generator as the impulse generator (25) opens, which can be fitted interchangeably with a closure (29) which contains a pyrotechnic firing element (26).

4. Generator according to one of the preceding claims,
**characterized in that**
the generator's impulse generator (25) acts on the piezo columns (13) at one housing end (33.2) via the piston (21) and a stamp (20), and the piezo columns (13) are supported with respect to the tubular housing (12) at the axially opposite housing end (33.1) via an inert opposing mass (17) and a base (19).

5. Generator according to one of the preceding claims,
**characterized in that**
a centrally constricted coupling piece (15) is provided as a spark gap electrode between the piezo columns (13.2 - 13.1), which are arranged such that they are aligned linearly and are connected electrically in series in opposite senses.

6. Generator according to one of the preceding claims,
**characterized in that**
an electrode (34) which is routed along the housing inner wall (35) is electrically connected in the area of each of the ends (18) of two piezo columns (13), which are arranged aligned and are electrically connected in series with one another, in opposite senses, which electrodes (34) both end as spark gap electrodes (36), facing one another, between the two piezo columns (13) in the area of an electrically conductive coupling piece (15).

7. Generator according to the preceding claim, **characterized in that** each electrode (34) is in the form of a thin hollow cylinder which on the one hand tapers in the form of a hollow truncated cone towards the spark gap electrodes (36) and on the other hand widens, axially opposite, to form a circumferential collar, against which the end (33) of the tubular housing (12) rests axially.

## Revendications

1. Générateur de haute tension (11), notamment destiné à être utilisé comme générateur de fréquence parasite (11), comprenant des colonnes piézoélectriques (13) pour convertir une pression mécanique en tension électrique, qui peut être court-circuité par des éclateurs (37), **caractérisé en ce que** deux colonnes piézoélectriques (13) sont branchées en série en sens inverse par le biais d'un élément d'accouplement (15) électriquement conducteur dans un boîtier cylindrique creux (12), en série avec un générateur d'impulsions mécanique (25), le long desquelles s'étendent des électrodes (34) depuis les extrémités frontales des colonnes (13) dans la zone de l'élément d'accouplement (15) et se terminent ici en tant qu'électrodes de décharge (36) pour les éclateurs (37) par rapport à l'élément d'accouplement (15) et entre elles.

2. Générateur selon la revendication 1, **caractérisé en ce que** le générateur d'impulsions mécanique prévu est un générateur au gaz (25) dont les gaz de réaction agissent sur les colonnes piézoélectriques (13.2 - 13.1) par le biais d'un piston (21) .

3. Générateur selon la revendication 1 ou 2, **caractérisé en ce qu'**un cylindre (23) est prévu à une extrémité frontale (33) du boîtier (12) pour accueillir un piston (21) qui peut coulisser dans le sens axial,
dans lequel débouche un espace d'accueil (24) pour un générateur de gaz servant de générateur d'impulsions (25) qui peut être équipé de manière interchangeable d'un élément de fermeture (29) contenant un élément d'allumage pyrotechnique (26) .

4. Générateur selon l'une des revendications précédentes, **caractérisé en ce que** son générateur d'impulsions (25), à une extrémité frontale de boîtier (33.2), agit par le biais du piston (21) et d'un poinçon (20) sur les colonnes piézoélectriques (13) qui sont soutenues à l'extrémité frontale de boîtier (33.1) opposée dans le sens axial par le biais d'un contrepoids inerte (17) et d'un fond (19) à l'opposé du boîtier tubulaire (12).

5. Générateur selon l'une des revendications précédentes, **caractérisé en ce qu'**il est prévu un élément de couplage (15) rétréci au centre qui fait office d'électrode de décharge entre les colonnes piézoélectriques (13.2 - 13.1) disposées selon un alignement linéaire et branchées électriquement en anti-série.

6. Générateur selon l'une des revendications précédentes, **caractérisé en ce que** dans la zone de chacune des extrémités (18) de deux colonnes piézoélectriques (13) disposées selon un alignement linéaire et branchées électriquement l'une à l'autre en anti-série est raccordée électriquement une électrode (34) qui s'étend le long de la paroi intérieure (35) du boîtier, les électrodes (34) se terminant toutes deux dans la zone d'un élément d'accouplement (15) électriquement conducteur entre les deux colonnes piézoélectriques (13) dirigées l'une vers l'autre en tant qu'électrodes de décharge (36).

7. Générateur selon l'une des revendications précédentes, **caractérisé en ce que** chaque électrode (34) est réalisée sous la forme d'un cylindre creux mince qui, d'une part, se rétrécit en forme de cône tronqué creux en direction des électrodes de décharge (36) et, d'autre part, s'élargit à l'opposé axialement pour former un collet périphérique contre lequel repose axialement l'extrémité frontale (33) du boîtier tubulaire (12).
